# EUROPÄISCHE PATENTSCHRIFT

(11) **EP 0 745 197 B1**
(45) Veröffentlichungstag und Bekanntmachung des Hinweises auf die Patenterteilung: **07.01.1999**
(21) Anmeldenummer: 95907799.1
(22) Anmeldetag: 13.02.1995
(51) Int. Cl.: F16H 1/32

(54) **GETRIEBE**
GEAR
ENGRENAGE

(30) Priorität: 14.02.1994 SK 17494
(43) Veröffentlichungstag der Anmeldung: 04.12.1996
(73) Patentinhaber: SPINEA S.R.O., 04001 Kosice (SK)
(72) Erfinder: JANEK, Bartolomej, 08001 Presov (SK)
(74) Vertreter: Jeck, Anton, Dipl.-Ing.
(86) Internationale Anmeldenummer: IB9500097
(87) Internationale Veröffentlichungsnummer: WO9522017

(56) Entgegenhaltungen:
- DE-A- 2 835 973
- FR-A- 990 493
- FR-A- 2 050 828
- FR-A- 2 320 469
- US-A- 4 846 018

## Beschreibung

Die Erfindung betrifft ein Getriebe gemäß Anspruch 1 sowie ein Getriebe nach dem Oberbegriff des Anspruches 2.

Solche Getriebe werden insbesondere bei Übersetzungen im Bereich von 1:6 bis 1:250 mit einer großen spezifischen Belastbarkeit in bezug auf das Gewicht und die äußeren Maße des Getriebes verwendet. Herkömmliche Getriebe mit großen Übersetzungsverhältnissen sind bekannt und z.B. in der US-A 4 846 018 beschrieben. Bei diesem Getriebe besteht der Reduktionsmechanismus aus einer primären und einer sekundären Reduktionsstufe. Die primäre Stufe besteht aus einem zentralen Ritzel sowie mehreren Satellitenrädern mit stirnseitiger Verzahnung. Die Sekundarstufe besteht aus einem System von Kurbelwellen, deren exentrischen Abschnitte drehbar gelagerte Rad-Bahnen mit Außenverzahnung tragen,'die mit der Innenverzahnung des Rades kämmen. Die Kurbelwellen sind über ihre Enden in Flanschen gelagert, die miteinander unverdrehbar verbindbar sind. Das zentrale Ritzel arbeitet mit den Satellitenrädern der Primärstufe zusammen, die an den Enden der Eingangskurbelwelle angeordnet sind. Ein wesentlicher Nachteil dieser Getriebe besteht in der geringen spezifischen Momentkapazität, die durch die Kraftübertragung der Lager der Eingangskurbelwellen begrenzt ist. Darüber hinaus ist die Dimensionierung der Wälzlager der Kurbelwellen so gewählt, daß kleine Getriebe in Größenordnung von 50 bis 100 mm nicht ohne weiteres herstellbar sind. Diese Wälzlager begrenzen auch die spezifische Moment-Kapazität der Getriebe. Ferner ist in der DE 28 35 973 ein weiteres Getriebe offenbart, das auch aus einer zentralen Eingangswelle besteht, auf deren exentrischen Zapfen drehbar gelagerte Satellitenräder mit Außenverzahnung angeordnet sind. Diese Zahnräder kämmen mit einem Rad mit Innenverzahnung. Die Satellitenräder sind mit durchgehenden axialen Öffnungen versehen. Um im Linien-Kontaktbereich zwischen den Zapfen und den Satellitenrädern der Sekundarstufe Gleitreibungen zu vermeiden, sind auf den Zapfen Buchsen angeordnet, die jedoch das eigentliche Gleitreiben und die damit verbundenen Probleme nicht beseitigen. Wegen der Gleitreibung und der hierbei entstehenden Verlustwärme sind ständige Umdrehungen des Getriebes zeitlich begrenzt. Diese Reibung nutzt die Kontaktflächen ab und erhöht die Ungenauigkeiten des Reduktionsmechanismus des Getriebes, was insbesondere dann unerwünscht ist, wenn eine hohe Genauigkeit des Getriebes verlangt wird. Daher wird im bekannten Falle eine hohe Herstellungsgenauigkeit der einzelnen Bauteile verlangt.

Schließlich ist z.B. in der FR-A 2 320 469 ein gattungsgemäßes Untersetzungsgetriebe mit einem transformierenden Körper (Plattenteil) und in einer einfachen Anordnung offenbart. Bestimmte, die Funktion des Getriebes maßgeblich beeinflußende Teile, wie Plattenteil oder Zahnräder mit Innen- oder Außenverzahnung, in doppelter oder mehrfacher Anordnung, gehen aus dieser Druckschrift nicht hervor.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 bzw. 2 gelöst.

Das vorgeschlagene Getriebe besteht aus mindestens einem Rad mit Innenverzahnung (Hohlrad) und aus regelmäßig zwei kreisrunden und scheibenförmigen Flanschen, die in bezug auf dieses Rad drehbar gelagert sind. Das Getriebe hat eine Eingangswelle mit exzentrischen Abschnitten, die gegeneinander um etwa 180° verdreht bzw. versetzt sind. Auf diesen Abschnitten sind Räder mit Außenverzahnung (Planetenrad) drehbar gelagert. Die Achsen der Exzenter sind in bezug auf die Achse der Eingangswelle um gleiches Maß (Exzentrizität) versetzt. Die Räder mit Außenverzahnung kämmen mit dem Rad mit Innenverzahnung und sie sind zwischen den Ausgangskörpern (Flansche) angeordnet. In manchen Fällen ist es zweckmäßig, wenn die Ausgangskörper gegeneinander nicht verdrehbar sind. In diesem Falle sind die eine Außenverzahnung aufweisenden Räder mit Axialöffnungen versehen, durch die Verbindungselemente geführt sind, und zwar kontaktfrei in bezug auf die Räder. Die Ausgangskörper sind in diesem Falle miteinander lösbar, jedoch unverdrehbar verbunden. Außer dieser unverdrehbaren Verbindung der Ausgangskörper können die Verbindungselemente auch die relative axiale Lage der Ausgangselemente definieren. Die Räder mit Außenverzahnung haben so viele Freiheitsgrade, daß sie Orbitalbewegungen (Planetenbewegungen) ausüben können. Diese Räder können daher Drehbewegungen um die Achse des Rades mit Innenverzahnung (Hohlrad) bei gleichzeitiger Rotation um die eigene Achse ausüben. Bei dem vorgeschlagenen Getriebe ist zwischen dem jeweiligen Rad mit Außenverzahnung und dem zugeordneten Ausgangskörper (Flansch) ein geeigneter Körper angeordnet, der die orbitale Bewegung des Rades mit Außenverzahnung in Drehbewegungen des Ausgangselementes um seine eigene Achse transformiert. Dieser Körper ist in bezug auf das Rad mit Außenverzahnung sowie in bezug auf den Ausgangskörper verschieblich angeordnet. Gleichzeitig übt der Körper Querbewegungen aus, und zwar in bezug auf die Achse der Eingangswelle (Kurbelwelle). Jeder Ausgangskörper ist mit Führungskörper aufweisenden Führungsbahnen, die eine lineare Führung des transformierenden Körpers definiert, versehen. Diese Führungen der Flansche sind in derselben Richtung und quer zur Rotationsachse des Ausgangskörpers ausgerichtet. Gleichzeitig ist jedes Rad mit Führungsbahnen ausgestattet, die lineare Führungen für die Querbewegungen des Transformationskörpers definieren. Diese Führungen sind quer zur Radachse ausgerichet. Der transformierende Körper (Organ) weist zwei vorzugsweise rechtwinklig zueinander angeordnete oder in ähnlicher Weise ausgerichtete Führungsbahnen auf, so daß hierdurch der transformierende Körper verschieblich und linear geführt ist, und zwar sowohl in bezug auf den Ausgangskörper als auch in bezug auf das zugeordnete Rad. Mindestens zwei Ausgangskörper des Getriebes, die bei einer bestimmten Ausführungsform ein Paar bilden, sowie mindestens ein transformierender Körper, der mindestens einem dieser Ausgangskörper zugeordnet ist, sind mit Zentralöffnungen versehen, so daß die Eingangswelle durch die zentralen Öffnungen der Ausgangskörper geführt ist und gleichzeitig durchquert sie kontaktfrei die zentrale Öffnung des zugeordneten Transformationskörpers.
Die Führungsbahnen der Linearführung sind in bzw. am Ausgangskörper ausgebildet, und zwar an den einander gegenüberliegenden Seiten der Vorsprünge, die in bezug auf die Mittelachse des Ausgangskörpers durch achsensymmetrische und an den axialen Stirnseiten der Flansche angeordnete Paare gebildet sind. Die axialen Vorsprünge (Anschläge) haben in ihrer axialen Draufsicht die Form von bogenförmigen Trapezen. In diesen Anschlägen sind axiale Öffnungen (Bohrungen) ausgebildet. Die Führungsbahnen der Linearführung am Rad mit Außenverzahnung sind durch jeweils zwei gegenüberliegende Seiten der Anschläge des Rades definiert. Die Führungsbahnen können zum einen direkt an den Anschlägen (Vorsprüngen) des Rades sowie des Ausgangskörpers ausgebildet sein. Sie können zum anderen auch durch flache Leisten gebildet sein, die an den einander gegenüberliegenden Seiten der Anschläge des Rades und des Ausgangskörpers angebracht sind. Der Transformationskörper ist vorzugsweise durch vier Arme/Schenkel gebildet, die jeweils zwei gegenüberliegende, von einem ringartigen Teil des Transformationskörpers getragene Paare definieren. Das eine Paar gegenüberliegender Arme definiert die erste Führungsbahn, durch die der Transformationskörper in einer Linearführung des Ausgangskörpers verschieblich Arme/Schenkel die zweite Führungsbahn (Partie), durch welche der Transformationskörper in der Linearführung verschieblich angeordnet ist. Diese Linearführung ist im bzw. am Rad mit Außenverzahnung gebildet. Zwischen den Führungsbahnen der Linearführung, die am Ausgangskörper gebildet sind, und den Führungsbahnen des Transformationskörpers sind Wälzelemente, z.B. Zylinder, angeordnet. In Fällen, wo die einzelnen Teile des Getriebes mit Spiel zueinander angeordnet sein können, können die Führungsbahnen am Flansch und am Rad mit Außenverzahnung in Form von Führungs- bzw. Gleitflächen ausgebildet sein. Gleitschichten, die aus Werkstoffen mit guten Gleiteigenschaften gebildet sind, erhöhe den Wirkungsgrad der Übertragung. Verbindungselemente, durch welche die Flansche miteinander verbindbar sind, durchqueren die axialen Öffnungen der Anschläge. Die axiale Lage (Abstand) der Flansche zueinander ist durch Distanzelemente definiert. Außer des Falles, wo das Verbindungselement und der Distanzkörper integriert sind und ein einziges Teil bilden, sind die Distanzelemente entweder direkt an den Anschlägen des Flansches ausgebildet oder sie bilden ein separates Teil des Getriebes, wobei sie mit axialen Öffnungen versehen sind, die die Verbindungselemente durchqueren. Die Innenverzahnung kann aus Elementen mit kreisrundem Querschnitt, z.B. Zylindern, gebildet sein, die am Innenumfang und in um die Achse gleichmäßig verteilten Vertiefungen des Rades mit Innenverzahnung (Hohlrad) angeordnet sind. Die Außenverzahnung kann ebenfalls aus Elementen mit kreisrundem Querschnitt, z.B. auch aus Zylindern, gebildet sein, die in Vertiefungen/Aufnahmen angeordnet sind, wobei die Vertiefungen am Außenumfang des Rades gleichmäßig verteilt sind. Die Zusammenarbeit des Rades mit Außenverzahnung mit dem Rad mit Innenverzahnung kann vorteilhaft in zwei Mitnahmebereichen verwirklicht sein, die in bezug auf eine durch die Achsen beider Räder definierte Ebene symmetrisch ist. Die Mitnahme der Räder mit zylindrischer Verzahnung in zwei Mitnahmebereichen kann durch Vorspannung realisiert werden, wodurch eine markante Linearisierung der Charakteristik der Zähne erreicht wird. Diese Vorspannung wird durch Kontaktelastizität der zylindrischen Zähne ermöglicht. Mindestens ein Flansch ist im Gehäuse (Rad mit Innenverzahnung) drehbar gelagert. Am Außenumfang der Flansche und an deren stirnseitigen Flächen, die dem Transformationskörper zugekehrt sind, können radiale und axiale Umlauflagerbahnen ausgebildet sein. Genauso kann das Rad mit Innenverzahnung an seinem Innenumfang mit Lagerkörpern mit Umlaufbahnen versehen sein, die zur Lagerung der Flansche im Gehäuse (Hohlrad) dienen können. An den Stirnseiten, die dem zugeordneten Flansch zugekehrt sind, können hierbei axiale Lagerbahnen ausgebildet sein. Zwischen den radialen und den axialen Umlaufbahnen des Flansches und des Rades mit Innenverzahnung sind Wälzelemente angeordnet. Zwei fest verbundene Flansche und das Rad mit Innenverzahnung bilden hierdurch ein Radial-Axial-Lager mit hoher Festigkeit und Kraftkapazität. Das Flanschpaar ist in bezug auf das Rad mit Innenverzahnung ferner so gelagert, daß mit diesem Rad ein Körper fest verbunden ist, in dem ein angetriebener Körper drehbar gelagert ist. Dieser Körper ist mit dem Flanschpaar verbunden. Das angetriebene Organ kann z.B. die Eingangswelle sein, deren Flansch-Partie mit den Flanschen (Ausgangskörper) fest verbindbar ist. Die Eingangswelle kann in der zentralen Öffnung des einen oder der anderen beiden Flansche(s) mittels eines Lagers gelagert sein.
Mit der Eingangswelle des Getriebes ist ein Mitnehmer mit axialen exzentrischen Abschnitten fest verbunden. Die axialen Abschnitte sind an der Stirnfläche des Mitnehmers und auf einem Kreis gleichmäßig angeordnet. Die exzentrischen Abschnitte tragen drehbar gelagerte Satellitenzahnräder mit Außenverzahnung. Diese Satellitenzahnräder kämmen mit der Innenverzahnung , die am Flansch ausgebildet ist, wobei sie gleichzeitig mit der Außenverzahnung des Eingangsritzels kämmen.

Das Wesen des Getriebes mit einem exzentrischen Abschnitt besteht im folgenden:

Das Getriebe besteht aus einem Rad mit Innenverzahnung (Hohlrad) und einem Flansch. Der Flansch ist in bezug auf das Rad mit Innenverzahnung drehbar gelagert. Das Getriebe hat eine Eingangswelle mit mindestens einem exzentrischen Abschnitt (Exzenter), auf dem ein Rad mit Außenverzahnung drehbar gelagert ist. Dieses Rad kämmt mit dem Rad mit Innenverzahnung. Das Rad mit Außenverzahnung hat Freiheitsgrade zum Ausüben von Orbitalbewegungen (Planetenbewegungen), das heißt, es kann Drehbewegungen um die Achse des Rades mit Innenverzahnung bei gleichzeitiger Rotation um die eigene Achse ausüben. Das Getriebe mit einem Exzenter ist dadurch gekennzeichnet, daß zwischen dem Rad mit Außenverzahnung und dem Flansch ein geeigneter transformierender Körper angeordnet ist, der die Orbitalbewegung des Rades mit Außenverzahnung in Drehbewegungen des Flansches um seine eigene Achse und gegebenenfalls des Hohlrades transformiert. Der transformierende Körper (Organ) ist sowohl in bezug auf das Rad mit Außenverzahnung als auch in bezug auf den Flansch verschieblich angeordnet, wobei er gleichzeitig Querbewegungen in bezug auf die Achse der Eingangswelle ausübt.

Die durch die Erfindung erzielten Vorteile können wie folgt zusammengefaßt werden:
a) Die Lager der Eingangswelle sind außschließlich durch Kräfte belastet, die im Kämmbereich der Zähne entstehen. Dadurch wird eine hohe spezifische Momentkapazität des Getriebes erreicht. Kraftreaktionen aufgrund des Belastungsmomentes, das auf den gegenüberliegenden Armen des transformierenden Körpers entsteht, werden gegenseitig behoben und sie werden in die Lager der Eingangswelle nicht als Kraftbelastung übertragen. Mit anderen Worten, der transformierende Körper überträgt nur das Drehmoment und erzeugt keine Kraftreaktionen. Dadurch wird die MomentKapazität des Getriebes in bezug auf herkömmliche Systeme bzw. Getriebe um etwa 50 % erhöht.
b) Reduktionsmechanismus ohne Gleitreibung ergibt maximalen Wirkungsgrad. Wälzelemente, die zwischen den Führungsbahnen des Flansches und den Führungsbahnen des transformierenden Körpers sowie zwischen den Führungsbahnen des Rades mit Außenverzahnung und Führungsbahnen des transformierenden Körpers angeordnet sind, bilden lineare Wälzführungen des transformierenden Körpers während seinen relativen Verschiebebewegungen in bezug auf den Flansch und dem Rad mit Außenverzahnung. Im vorgeschlagenen Reduktionsmechanismus kommt somit ausschließlich Wälzreibung zum Tragen, wodurch ein maximal möglicher Wirkungsgrad der Leistung erreicht wird. Die Größe der Amplitude der Verschiebegeschwindigkeit bei Oszillationsbewegungen des transformierenden Körpers ist ordnungsgemäßig 10⁻¹ m/s. Dieser Wert ist in bezug auf die Umlaufgeschwindigkeit von Rotationslagern etwa 100 x geringer, wodurch die Verlustleistung des Reduktionsmechanismus bei dem vorgeschlagenen Getriebe entsprechend verringert wird. Aus diesem Grunde kann das Getriebe bei deutlich höheren Dauerdrehzahlen arbeiten als herkömmliche Getriebe, deren Reduktionsmechanismus Rotationsgleit- und Wälzlager nutzt. Bei diesem Vergleich werden gleiche Temperaturarbeitsregime berücksichtigt.
c) Vorgespannter Reduktionsmechanismus (lineare Charakteristik) der Torsionsfestigkeit im Bereich des Null-Belastungsmomentes und die hohe Laufgenauigkeit des Getriebes.
   Die Wälzelemente in der Führung des transformierenden Körpers, der in bezug auf den Flansch und das Rad relative Verschiebungen ausübt, bilden ein elastisches System, das eine Vorspannung der Lagererung des transformierenden Körpers in linearer Führung, die im Flansch und im Rad mit Außenverzahnung gebildet ist, ermöglicht. Diese Vorspannung wird nicht durch Anstieg von Passivwiderständen und eine Fluktuation am Ausgang des Getriebes begleitet. Der Zweck der Vorspannung der Wälzführung des transformierenden Körpers ist die Erreichung einer Linearcharakteristik der Torsionsfestigkeit bei dem Getriebe im Null-Bereich des belasteten Moments. Durch die Vorspannung wird der Totlauf (lost motion) des Getriebes eliminiert, der bei genauen Servoführungen Schwierigkeiten verursacht.
d) Der transformierende Körper besetzt nicht den radialen Konstruktionsraum zwischen der Eingangswelle und der Außenverzahnung des Rades, so daß sehr kleine Getriebe hergestellt werden können. Extreme Maße des Getriebes im Bereich von 60 mm oder kleiner sind in bezug auf herkömmliche Getriebe leicht verwirklichbar.
e) Das Getriebe integriert zwei Funktionen: Die Funktion des Getriebes als solchen und des Lagers.
   Die äußeren Lagerbahnen, die direkt im Flansch und im Rad mit der Innenverzahnung ausgebildet sind, erfüllen innerhalb des Getriebes auch eine zweite Funktion, nämlich die Funktion eines radialen Lagers, das Kräfte und Kraft-Momente in allen Richtungen überträgt. Der freie radiale Raum oberhalb des transformierenden Körpers wird vorteilhaft für die Anordnung von Axialwälzlagern genutzt. Ein solches Getriebe kann man direkt als einen Drehtisch für verschiedene Vorrichtungen oder als Gelenk eines Roboters nutzen.
f) Dynamische Ausgeglichenheit der Getriebekonstruktion:
   Bei Getrieben mit zwei exzentrischen Partien, die gegeneinander und um dieselbe Achse um 180° versetzt sind, üben die transformierenden Körper harmonische oszillierende Bewegungen aus, und zwar in Gegenphase, wodurch deren Kraftwirkungen sich gegenseitig beheben und sie werden nicht an die Umgebung, in der das Getriebe installiert ist, übertragen.
g) Die Verwendung von aus Zylindern bestehenden Zahnrädern ermöglicht eine Vorspannung des kämmenden Subsystems. Die Vorspannung im Bereich der Mitnehmer der zylindrischen Zähne ist mit gleichen Effekten verbunden, wie die Vorspannung des Reduktionsmechanismus, wodurch das Getriebe als Ganzes eine hohe Linearität der Torsionsfestigkeit erreicht, und zwar auch im Null-Bereich der Momentbelastung.
h) Der Vorteil von Flanschen und Rädern mit Außenverzahnung: Die Führungsbahnen am Flansch und am Rad mit Außenverzahnung werden gleichmäßig abgenutzt, was in bezug auf Planetengetriebe der herkömmlichen Systeme vorteilhaft ist.

Einige Ausführungsbeispiele der Erfindung sind in der Zeichnung schematisch dargestellt und werden im folgenden näher erläutert. Es zeigen
- Fig. 1: ein Getriebe im Querschnitt, wobei die Flansche durch Verbindungsmittel verbunden sind,
- Fig. 1a: einen Schnitt entlang der Linie B-B nach Fig. 1,
- Fig. 1b: einen Schnitt entlang der Linie C-C nach Fig. 1,
- Fig. 1c: eine Anordnung von Leisten mit Führungsbahnen bei Anschlägen,
- Fig. 1d: in Explosionsdarstellung einen Flansch, ein Rad und ein Verbindungselement nach Fig. 1,
- Fig. 1e: einen transformierenden Körper in perspektivischer Seitenansicht,
- Fig. 2: eine zweite Ausführungsform des Getriebes, wobei die Flansche durch Verbindungselemente miteinander verbunden sind, die durch axiale Öffnungen der Distanzelemente geführt sind,
- Fig. 2a: einen Schnitt entlag der Linie B-B nach Fig. 2,
- Fig. 2b: einen Schnitt entlang der Linie C-C nach Fig. 2,
- Fig. 2c: eine Anordnung des transformierenden Körpers in einer linearen Gleitführung, die am Rad mit Außenverzahnung und am Flansch ausgebildet ist, wobei die Gleitschichten an den Anschlägen des Rades und des Flansches gebildet sind,
- Fig. 2d: in perspektivischer Seitenansicht einen Flansch und ein Rad mit Außenverzahnung gemäß Fig. 2,
- Fig. 2e: das in Fig. 2 dargestellte Getriebe in Explosionsdarstellung,
- Fig. 3: ein Getriebe mit einem Vorschaltgetriebe,
- Fig. 3a: eine Axialansicht einer Sektion des Vorschaltgetriebes nach Fig. 3,
- Fig. 4: ein weiteres Getriebe mit zwei Flanschen, die durch ein angetriebenes Organ miteinander verbunden sind, das in einem Körper drehbar gelagert ist, der mit dem Rad mit Innenverzahnung fest verbunden ist,
- Fig. 5: ein Getriebe mit einem exzentrischen Abschnitt sowie einem transformierenden Körper und
- Fig. 5a: einen Schnitt entlang der Linie D-D nach Fig. 5.

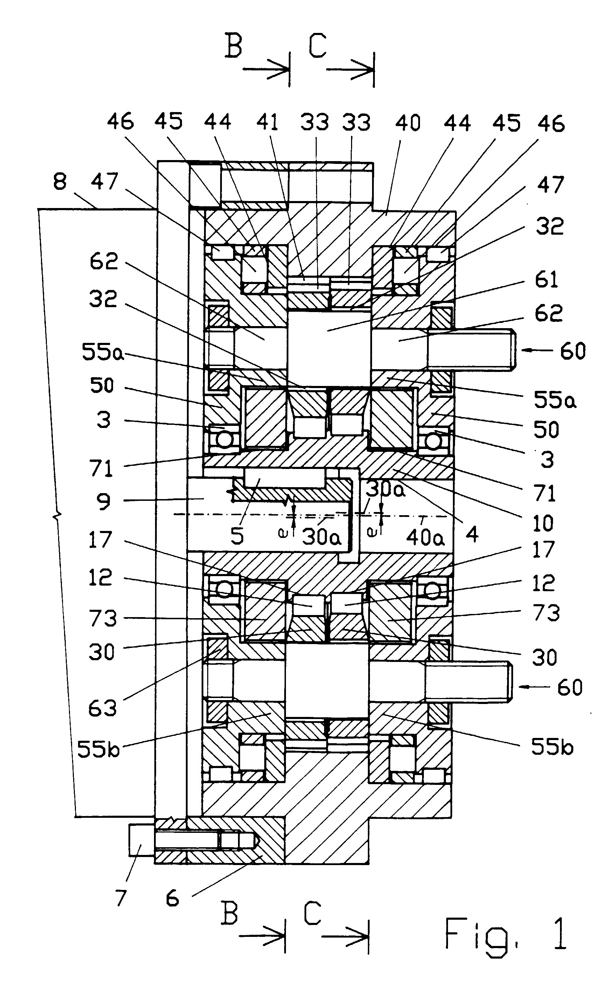

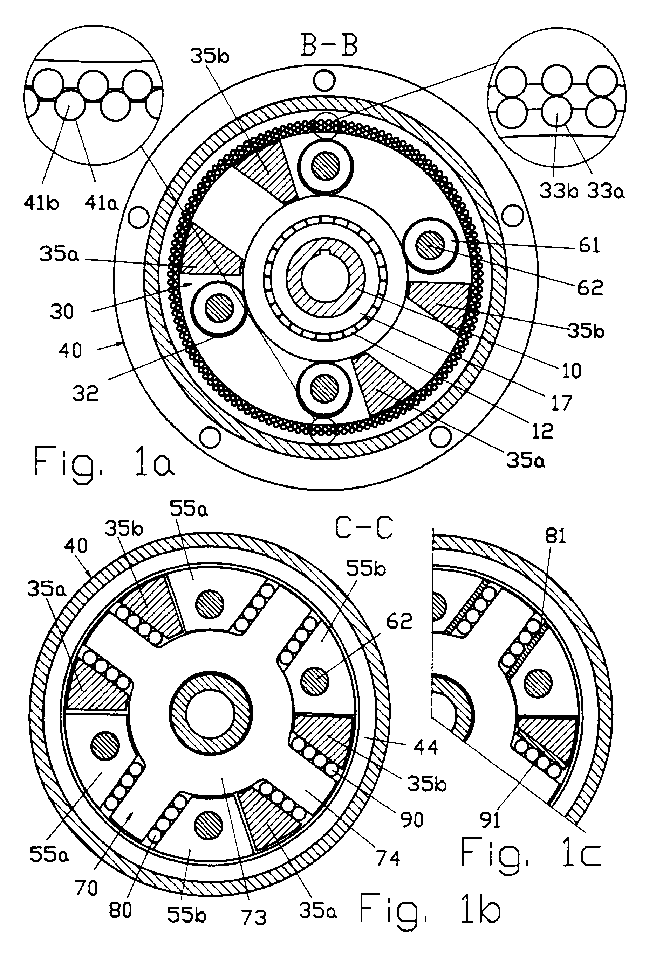

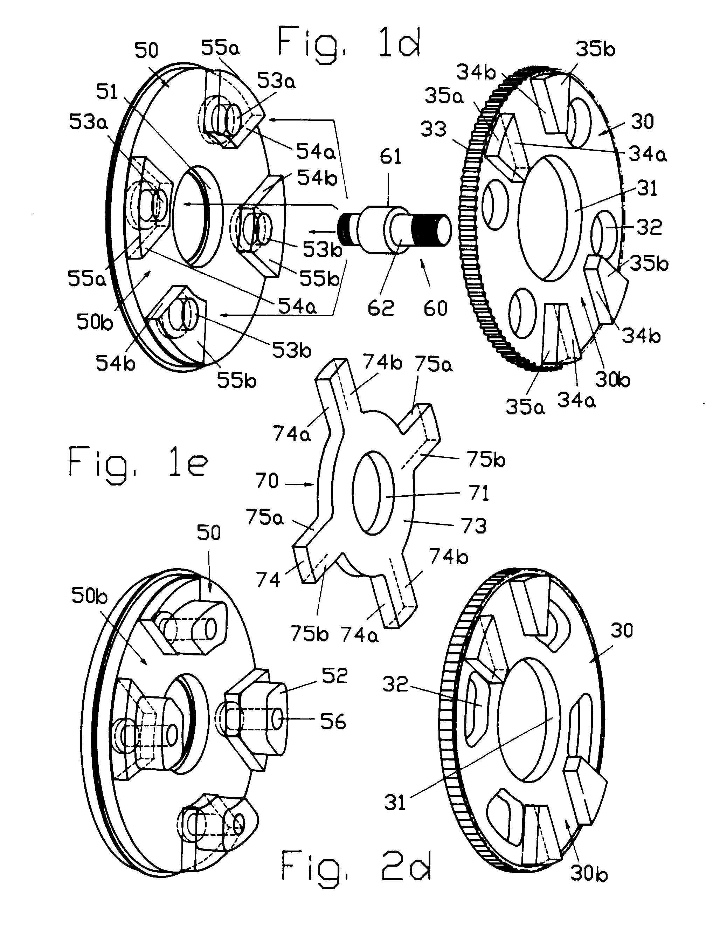

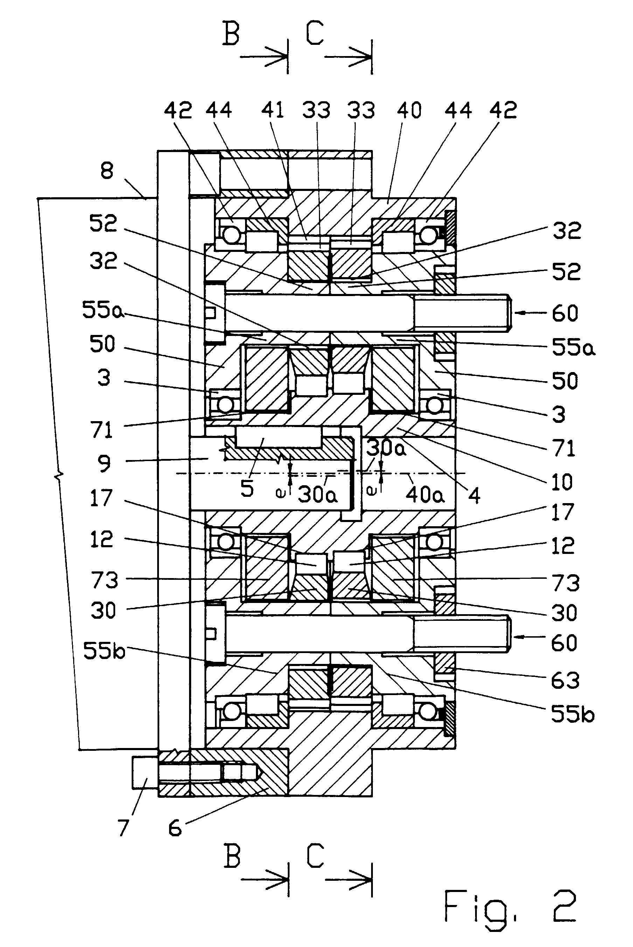

Das erste Getriebe mit einem Kreuz-Reduktionsmechanismus ist in den Fig. 1, 1a, 1b, 1c, 1d und le dargestellt. Die Eingangswelle 10 weist zwei Exzenter 17 auf, die um 180° verdreht sind. Die Abschnitte 17 tragen drehbar gelagerte Räder 30 mit Außenverzahnungen 33 und zentralen Öffnungen 31. Die Räder 30 haben mehrere durchgehende Axialöffnungen 32, die um die Achse der Räder 30 gleichmäßig verteilt sind. Am Umfang der Exzenter sind Laufbahnen für Zylinder 12 ausgebildet, die als Lagerkörper für die Räder 30 dienen. Die Eingangswelle 10 ist mittels einer Feder 5 mit der Motorwelle 9 eines Antriebsmotors 8 verbunden. Der Motor ist mit einem Rad 40 mit Innenverzahnung 41 mittels eines Körpers 6 und Schrauben 7 verbunden. Die Räder 30 sind in der Mitte zwischen den kreisrunden Flanschen 50 angeordnet, die durch Verbindungselemente 60 miteinander verbunden sind. Die Verbindungselemente 60 durchqueren kontaktfrei die Öffnungen 32 der Räder 30, so daß die Flansche 50 miteinander fest verbindbar sind. Das Flansch-Paar 50 ist in bezug auf das Rad 40 mit Innenverzahnung 41 drehbar gelagert. Das Rad 40 kämmt mit der Außenverzahnung der Räder 30. Die Achsen 30a der Räder 30 sind parallel zur Achse 40a des Rades 40 angeordnet, jedoch um eine Exzentrizität e versetzt. Die Flansche 50 sind mit Führungsflächen/bahnen 54a, 54b versehen, die eine lineare Führung 50b definieren. Die Führung 50b ist quer zur Achse des Flansches 50 orientiert. Jedes Rad 30 ist mit Führungsbahnen 34a, 34b versehen, die eine lineare Führung 30b definieren, wobei diese lineare Führung quer zur Achse 30a des Rades 30 orientiert ist. An beiden Seiten des Getriebes ist zwischen dem Flansch 50 und dem Rad 30 ein transformierender Körper 70 angeordnet. Der transformierende Körper 70 besitzt in zwei orthogonal zueinander angeordneten Richtungen Bahnen 74a, 74b bzw. 75a, 75b, und zwar derart, daß diese Bahnen in zwei senkrecht zueinander verlaufenden Richtungen verschieblich angeordnet sind. Die eine lineare Führung ist am Flansch 50 ausgebildet, während der Körper 70 in der anderen Richtung in der Führung 30b am Rad 30 verschieblich angeordnet ist. Beide Flansche 50 und der Körper 70 haben zentrale Öffnungen 51 bzw. 71. Die Eingangswelle 10 ist an ihren beiden Enden in den Zentralöffnungen 51 der Flansche 50 gelagert, und zwar in Lagern 3. Die Eingangswelle 10 durchquert kontaktfrei die Öffnung 71 des Körpers 70. Der Innendurchmesser der Öffnung 71 ist hierbei um mindestens 2e größer als der Außendurchmesser der Eingangswelle-Partie, welche die Öffnung 71 durchquert. Die Führungsflächen 54a und 54b, mit denen jeder Flansch 50 versehen ist, sind an den einander gegenüberliegenden Seiten der Anschläge 55a und 55b ausgebildet. Die Anschläge 55a und 55b sind als achsensymmetrische Paare ausgebildet und an der Stirnseite des Flansches angeordnet. Die Führungsflächen 54a und 54b sind direkt an den Anschlägen 55a und 55b des Flansches 50 (Fig. 1b) ausgebildet. Sie können auch als flache Leisten 81 ausgebildet sein, die an den gegenüberliegenden Seiten der Anschläge 55a, 55b (Fig. 1c, Fig. 2c) befestigt sein können. Durch die Anschläge 55a, 55b der Flansche 50 führen axiale Öffnungen/Bohrungen 53a, 53b. Die Führungsbahnen 43a, 43b, mit denen jedes Rad 30 versehen ist, sind an den gegenüberliegenden Seiten der Anschläge 35a und 35b ausgebildet. Sie sind durch mittig gegenüberliegende Paare gebildet, die an der Stirnseite des Rades 30 vorhanden sind. Die axialen Öffnungen 32 des Rades 30 sind auf einem Kreis zwischen Anschlägepaaren 35a, 35b angeordnet. Die Führungsbahnen 34a, 34b sind direkt an den Anschlägen 55a, 55b des Rades 30 (Fig. 1) ausgebildet. Sie können jedoch auch als flache Leisten 91 ausgebildet sein, die fest an den gegenüberliegenden Seiten der Anschläge 35a, 35b (Fig. le, Fig. 2c) ausgebildet sind.

Der Körper 70 ist mit vier Schenkeln/Armen 74 versehen, die von einem Ringabschnitt 73 getragen sind. Das eine Paar gegenüberliegender Arme 74 weist Führungsbahnen auf, durch die der Körper 70 in der linearen Führung 50b des Flansches 50 verschieblich angeordnet ist. Das zweite Paar der gegenüberliegenden Arme 74 weist ebenfalls parallele Führungsbahnen auf, durch welche der Körper 70 in der linearen Führung 30b des Rades 30 verschieblich angeordnet ist. Zwischen den Führungsflächen 54a und 54b der linearen Führung des Flansches 50 und den Führungsflächen des Körpers 70, durch welche der Körper 70 in der linearen Führung 50b verschieblich angeordnet ist, sind zylindrische Wälzkörper 80 angeordnet. Genauso ist es verwirklicht auch bei den Führungsbahnen 34a und 34b der linearen Führung 30b am Rad 30 und den Bahnen des Körpers 70, in denen der Körper 70 verschieblich angeordnet ist. In beiden Fällen ist eine Führung des Körpers 70 mittels Wälzlager gewährleistet, wenn er in bezug auf das Rad sowie in bezug auf den Flansch 50 und die Achse 40a relative Oszillationsbewegungen ausübt. Der Abschnitt 62 der Verbindungselemente 60, die die Flansche 50 verbinden, durchquert die axialen Öffnungen 53a und 53b, die in den Anschlägen 55a, 55b ausgebildet sind. Der Abschnitt 62 ist axialseitig länger als die Dicke des Rades 30, aus dem er herausragt. Der abgesetzte Teil (Bund) 61 der Verbindungselemente 60 durchquert frei die axialen Öffnungen 32 des Rades 30. Die Innenverzahnung 41 des Rades 40 besteht aus Zylindern 41b, die in Axialnuten 41a gelagert sind. Die Axialnuten 41a sind am Innenumfang des Rades 40 gleichmäßig verteilt. Es handelt sich somit um Zahnräder, deren Zähne vorzugsweise aus Zylindern bestehen. Das gleiche gilt auch für die Außenverzahnung 33 des Rades 30, die aus Körpern 33b mit kreisrundem Querschnitt besteht. Die Körper 33b sind in Axialnuten 33a gelagert. Die Axialnuten 33a sind am Außenumfang des Rades 30 gleichmäßig verteilt. Am Außenumfang des Flansches 50 und am Innenumfang des Rades 40 sind radiale Umlaufbahnen ausgebildet, auf denen die Zylinder 47 gelagert sind. Die den Körpern 70 zugekehrten Stirnflächen der Flansche 50 sind mit axialen LagerBahnen versehen, auf denen die Körper (Zylinder aus Stahl oder anderen harten Werkstoffen) 46 angeordnet sind. Die Körper 46 sind in einem axialen Lagerkäfig angeordnet. Durch axiale Abstandsringe 44 kann die gewünschte Vorspannung der Lager in axialer Richtung erreicht werden. Die Muttern 63 verbinden zusammen mit den Verbindungselementen 60 die Flansche fest miteinander. Hierbei stehen die Stirnflächen der Anschläge 55a und 55b mit den Stirnflächen des Bundes 61 der Verbindungselemente 60 in Druckverbindung. Der Bund 61 des Verbindungselementes 60 erfüllt somit die Funktion eines Distanzelementes. Die Abstandsringe 44 sichern die Zylinder 41 und 33 gegen axiale Verschiebung.

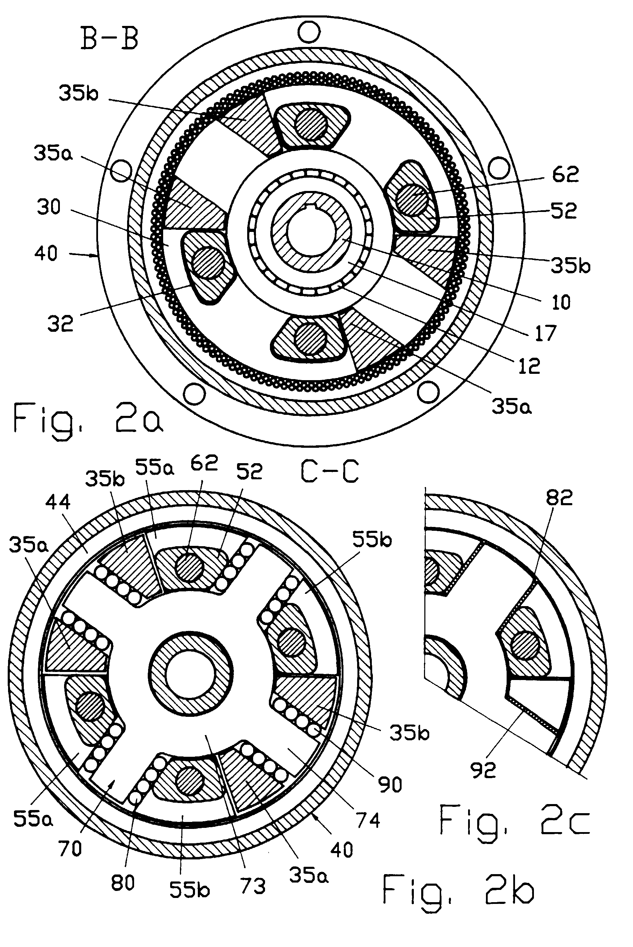

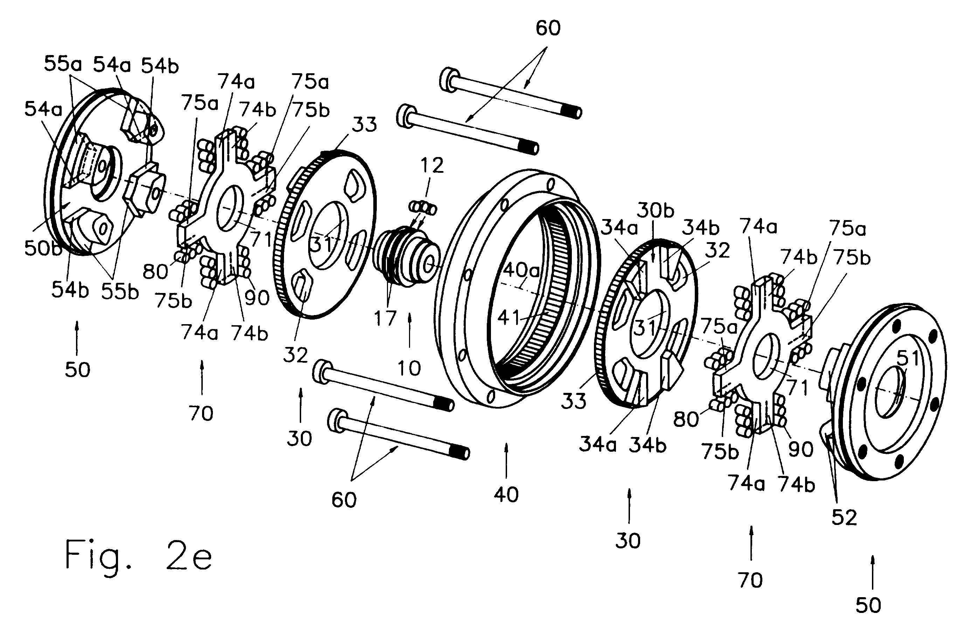

In den Fig. 2, 2a, 2b, 2c, 2d, 2e und le ist eine weitere Ausführungsform des Getriebes dargestellt. Gegenüber der ersten Ausführungsform besteht der Unterschied in der Verbindungsart der Flansche 50. An den Anschlägen 55a und 55b des Flansches 50 sind Distanzelemente 52 angeordnet. Diese Distanzelemente 52 durchqueren mit Spiel axiale Öffnungen 32 des Rades 30, wobei sie mit axialen Öffnungen 56 versehen sind. Die Öffnungen 56 sind von den Verbindungselementen 60 durchquert. Durch Anziehen der Schraubenmuttern 63 definieren die Stirnseiten der Distanzelemente 52 die Lage der beiden Flansche.

Fig. 2e zeigt in Explosionsdarstellung das Getriebe nach Fig. 2.

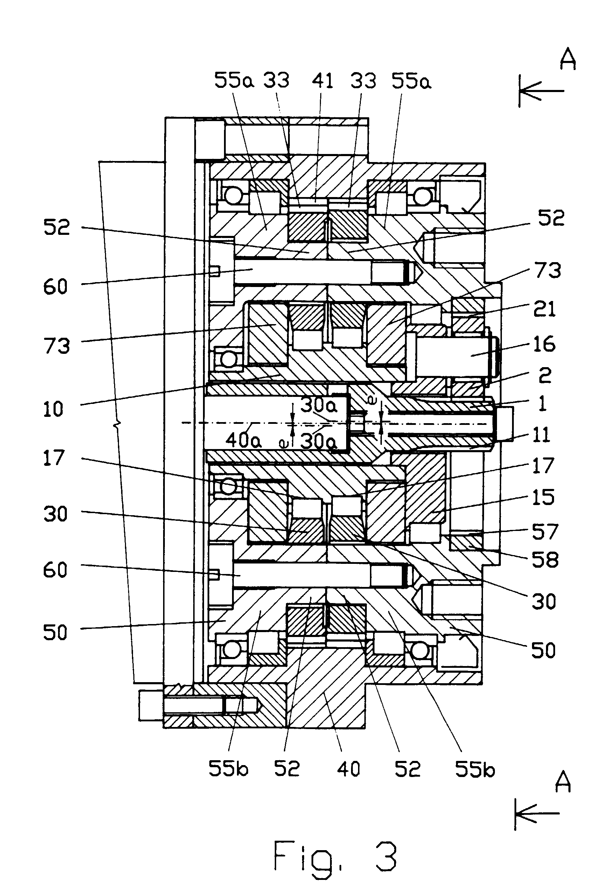

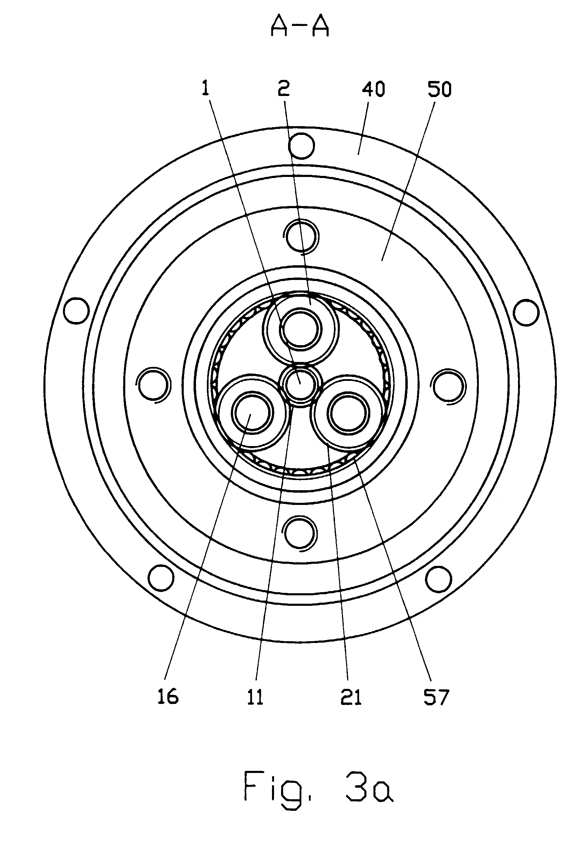

Eine weitere Ausführungsform des Getriebes mit einem Kreuz-Reduktionsmechanismus ist in den Fig. 3 und 3a dargestellt. Der Reduktionsmechanismus des Getriebes ist der gleiche wie bei den vorangegangenen Beispielen. Der Unterschied besteht in der Antriebsart der Eingangswelle 10. Mit der Eingangswelle 10 ist ein Mitnehmer 15 mit Axialzapfen 16 fest verbunden. Die Axialzapfen 16 sind gleichmäßig auf einem Kreis und auf der Stirnseite des Mitnehmers 15 angeordnet. Auf den Zapfen sind Satellitenzahnräder 2 mit Außenverzahnung 21 drehbar gelagert. Die Zahnräder 2 kämmen gleichzeitig mit der Innenverzahnung 57 des Flansches 50 und mit der Außenverzahnung 11 des Eingangsritzels 1.

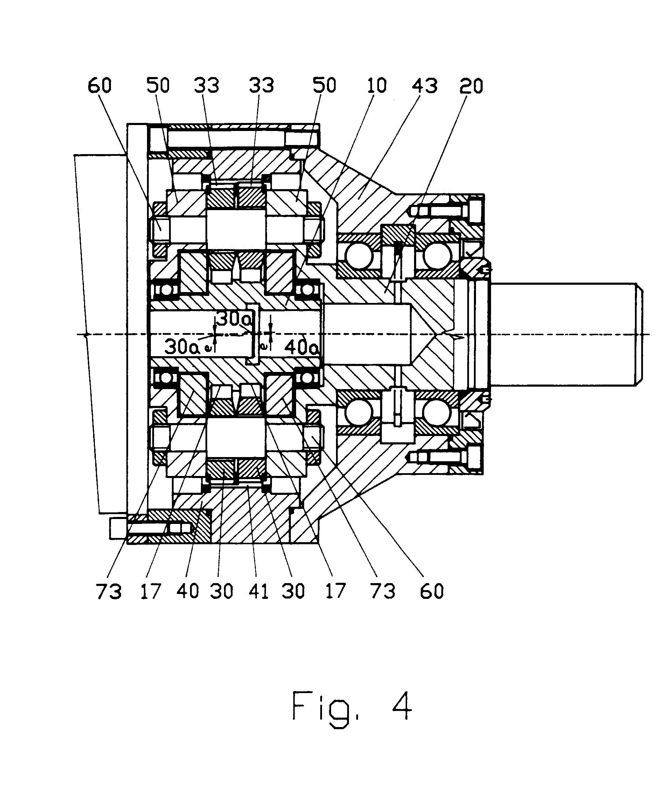

Eine vierte Ausführungsform des Getriebes mit einem Kreuz-ReduktionsMechanismus ist in Fig. 4 dargestellt. Der Unterschied zu den vorangegangenen Getrieben besteht in der Art der Lagerung der Flansche 50 gegenüber dem Rad 40. Bei dieser Ausführungsform ist mit dem Rad 40 mit Innenverzahnung 41 ein Körper 43 verbunden. In diesem Körper 43 ist ein angetriebenes Organ 20 drehbar gelagert, das mit dem Flansch 50 fest verbunden ist.

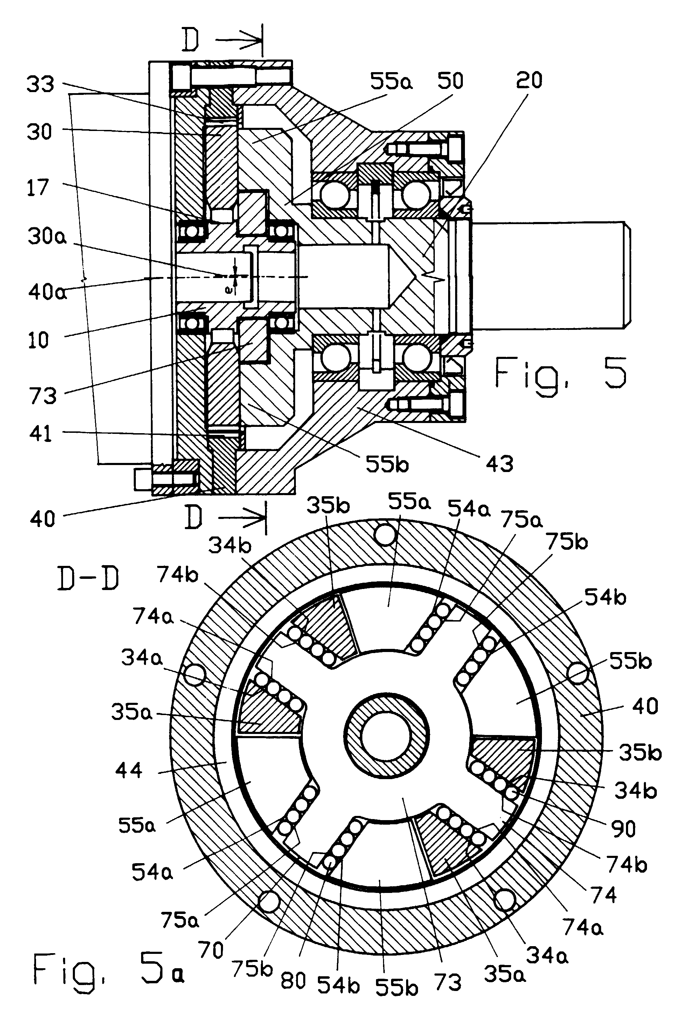

Schließlich ist in Fig. 5 ein Getriebe dargestellt, bei dem die Eingangswelle 10 mit einem exzentrischen Abschnitt 17 versehen ist. Auf diesem Abschnitt 17 ist ein Rad 30 mit einer Zentralöffnung 31 gelagert. Das Rad 30 weist eine Außenverzahnung 33 auf. Der Umfang des Abschnittes 17 bildet Laufbahnen für Zylinderkörper, die als Lager des Rades 30 dienen. Im Rad 40 ist die Innenverzahnung 41 im Eingriff mit der Außenverzahnung 33 des Rades 30. Der Flansch 50 ist auf der Ausgangsseite mit Führungsflächen 54a und 54b versehen, die eine lineare Führung in Richtung quer zur Rotationsachse des Flansches 15 definieren. Gleichzeitig ist das Rad 30 mit Führungsbahnen 34a und 34b versehen, die eine lineare Führung definieren. Diese Führung ist quer zur Achse 30a des Rades 30 gerichtet. Zwischen dem Flansch 50, der mit Führungsbahnen 54a, 54b versehen ist, und dem Rad 30, das mit Führungsbahnen 34a und 34b versehen ist, ist ein transformierender Körper 70 angeordnet. Der Körper 70 weist in zwei rechtwinkeligen zueinander verlaufenden Richtungen Führungsbahnen 74a, 74b bzw. 75a und 75b derart auf, daß er in zwei orthogonal zueinander verlaufenden Richtungen verschieblich angeordnet ist und oszillieren kann. Zum einen in linearer Führung des Flansches 50, zum anderen in linearer Führung des Rades 30. Zwischen den Führungsbahnen des Flansches 54a und 54b und des transformierenden Körpers 34a und 34b sind Zylinder 80 und 90 angeordnet, die das Verschieben des transformierenden Körpers während seiner Relativbewegungen gegenüber dem Rad 30 und dem Flansch 50 gewährleisten. Der Flansch 50 und der transformierende Körper 70 haben zentrale Öffnungen 51 und 71, wobei die Eingangswelle 10 an ihrem einen Ende in der zentralen Öffnung 51 des Flansches 50 über ein Lager gelagert ist, gleichzeitig ist sie mit Spiel durch die Zentralöffnung 71 des Körpers 70 geführt. Das andere Ende der Eingangswelle 10 ist im Rad 40 gelagert. Mit dem Rad 40 ist ein Körper 43 befestigt, in dem ein angetriebenes Organ 20 drehbar gelagert ist, das mit den Flansch 50 fest verbunden ist.

Möglich sind auch Lösungen mit gegenseitig verbundenen seitlichen Flanschen, zwischen denen ein Rad 30 angeordnet ist. Die Verbindungsart der Flansche wäre hier analog wie in oben beschriebenen Ausführungsbeispielen, wobei der linke Flansch sich zusammen mit dem Ausgangsflansch 50 bewegen würde.
- 1 -: Eingangs-Ritzel
- 2 -: Satellitenzahnrad
- 3 -: Lager der Eingangswelle 10 im Flansch des Getriebes
- 4 -: Axialöffnung der Eingangswelle des Getriebes
- 5 -: Feder der Motorwelle
- 6 -: Verbindungskörper des Motors und des Getriebes
- 7 -: Verbindungsmutter
- 8 -: Antriebsmotor
- 9 -: Motorwelle
- 10 -: Eingangswelle
- 11 -: Außenverzahnung des Eingangsritzels
- 12 -: Zylinderrollen des Drehlagers an Kurbelzapfen der Eingangswelle
- 15 -: Mitnehmer der Eingangswelle
- 16 -: Zapfen der Eingangswelle
- 17 -: Abschnitt (exzentrischer)
- 20 -: Antriebsorgan/Körper
- 21 -: Außenverzahnung der Satellitenzahnräder
- 30 -: Rad mit Außenverzahnung
- 30a -: Achse von 30
- 30b -: Führung von 30
- 31 -: Zentralöffnung des Rades
- 32 -: Öffnung des Rades
- 33 -: Außenverzahnung des Rades
- 33a -: Axial-Nuten/Rillen am Außenumfang des Rades
- 33b -: längliche Elemente mit kreisrunden Querschnitt, die die Verzahnung des Rades bilden
- 34a 34b -: Führungsbahnen
- 35a 35b -: Anschläge (Nasen) gebildet in mittig gegenüberliegenden Paaren an d der Stirnfläche des Rades
- 40 -: Rad mit Innenverzahnung
- 40a -: Achse von 40
- 41 -: Innenverzahnung des Rades 40
- 41a -: Axialnuten gebildet am Innenumfang des Gehäuses
- 41b -: längliches Element mit kreisrundem Querschnitt, das die Innenverzahnung des Gehäuses bildet
- 42 -: Lager des Flansches im Gehäuse
- 43 -: Körper (befestigt) am Gehäuse
- 44 -: Abstandsring
- 45 -: Lagerkäfig (axial)
- 46 -: Wälzelement (axial)
- 47 -: Wälzelement (radial)
- 50 -: Ausgangskörper (Flansch)
- 50b -: Führung an 50
- 51 -: Zentralöffnung des Ausgangskörpers
- 52 -: Distanz-Körper
- 53a 53b -: Axialöffnungen, die durch die Anschläge geführt und im Flansch ausgebildet sind
- 54a 54b -: Führungsflächen/Bahnen, gebildet am Flansch
- 55a 55b -: Anschläge, gebildet als mittig gegenüberliegende Paare und an der Stirnseite des Flansches angeordnet
- 56 -: Axialöffnungen der Distanzkörper
- 57 -: Innenverzahnung gebildet am Flansch
- 58 -: Kronenzahnrad mit Innenverzahnung
- 61 -: besetzte Partie des Querelementes
- 62 -: fluchtende Partie des Querelementes
- 63 -: Schraubenmutter zur Befestigung der Querelemente
- 70 -: Körper (Kreuz)
- 71 -: Öffnung (Zentrale des Kreuzes)
- 73 -: Kreispartie des Kreuzes
- 74 -: Schenkel des Kreuzes
- 74a 74b -: Bahn (Führung) des Kreuzes in erster Richtung
- 75a 75b -: Bahn (Führung) des Kreuzes, senkrecht zur Bahn in erster Richtung
- 80 -: Wälzkörper (Elemente) zwischen den Führungsbahnen des Ausgangskörpers und dem Rad
- 81 -: Leisten - befestigt an den Anschlägen des Flansches, an denen die Führungsbahnen der Wälzelemente gebildet sind
- 82 -: Gleitleisten, befestigt an den Anschlägen des Flansches
- 90 -: Wälzelemente, zwischen Führungsbahnen des Kreuzes und Rades
- 91 -: Leisten, befestigt an Randanschlägen, an denen die Führungsbahnen der Wälzelemente gebildet sind
- 92 -: Gleitleisten, befestigt an den Anschlägen des Rades
- e -: Exzentrizität des Kurbelzapfens.

## Patentansprüche

1. Getriebe mit mindestens einem Rad (40) mit zugehöriger Innenverzahnung (41), mit in Bezug auf das Rad (40) drehbar gelagerten Ausgangskörpern (50, 50), sowie mit einer Eingangswelle (10) mit mindestens zwei exzentrischen Abschnitten (17, 17), wobei auf jedem Abschnitt ein mit der Innenverzahnung (41) kämmendes Rad (30) mit Außenverzahnung (33) drehbar gelagert ist, wobei die Räder (30, 30) zwischen den Ausgangskörpern (50, 50) angeordnet sind und wobei zwischen dem jeweiligen Rad (30) und dem zugeordneten Ausgangskörper (50) ein die Planetenbewegung des Rades (30) in Rotationsbewegung des Ausgangskörpers (50) transformierender Körper (70) verschiebbar angeordnet ist und in Bezug auf die Achse der Eingangswelle (10) Querbewegungen ausübt.

2. Getriebe mit einem Rad (40) mit Innenverzahnung (41), mit einem in Bezug auf das Rad (40) drehbar gelagerten Ausgangskörper (50), mit einer Eingangswelle (10) mit einem exzentrischen Abschnitt (17), auf dem ein mit der Innenverzahnung (41) kämmendes Rad (30) mit Außenverzahnung (33) drehbar gelagert ist, sowie mit einem zwischen dem Rad (30) und dem Ausgangskörper (50) angeordneten und die Planetenbewegung des Rades (30) in Rotationsbewegung des Ausgangskörpers (50) transformierenden Körper (70), der in Bezug auf das Rad (30) und den Ausgangskörper (50) verschiebbar angeordnet ist und in Bezug auf die Achse der Eingangswelle (10) Querbewegungen ausübt,
dadurch gekennzeichnet,
daß der Körper (70) sich radial erstreckende Schenkel (74) aufweist, von denen einige mit dem Ausgangskörper (50) zusammenarbeiten, während die anderen mit dem Rad (30) in Wirkverbindung stehen.

3. Getriebe nach Anspruch 1 oder 2, wobei die Achse der Welle (10) und die Achse des jeweiligen exzentrischen Abschnittes (17) parallel zueinander verlaufen.

4. Getriebe nach Anspruch 1, wobei die Ausgangskörper (50) durch Verbindungsmittel (60) unverdrehbar miteinander verbindbar sind.

5. Getriebe nach Anspruch 4, wobei die Räder (30) Öffnungen (32) für die Verbindungsmittel (60) aufweisen.

6. Getriebe nach einem der Ansprüche 4 - 5, wobei die Verbindungsmittel (60) die Räder (30) kontaktfrei durchqueren.

7. Getriebe nach einem der Ansprüche 4 - 6, wobei die Verbindungsmittel (60) als Schrauben ausgebildet sind, die sich parallel zur Achse (40) der Eingangswelle (10) erstrecken.

8. Getriebe nach einem der Ansprüche 1 - 7, wobei das Rad (30) und der jeweilige Ausgangskörper (50) Führungen (30b, 50b) für den Körper (70) aufweisen.

9. Getriebe nach einem der Ansprüche 1 - 8, wobei die Führungen (30b, 50b) lineare Führungsbahnen (34b, 54b) aufweisen.

10. Getriebe nach einem der Ansprüche 1 - 9, wobei der jeweilige Körper (70) in Bezug auf den jeweiligen Ausgangskörper (50) und das Rad (30) linear geführt ist.

11. Getriebe nach einem der Ansprüche 1 - 10, wobei der jeweilige Körper (70) in Form eines Kreuzes mit rechtwinklig zueinander angeordneten Schenkeln (74) ausgebildet ist.

12. Getriebe nach einem der Ansprüche 1 - 11, wobei zwei parallel zueinander verlaufende Schenkel (74) vom jeweiligen Ausgangskörper (50) geführt sind, während die anderen zwei parallel zueinander verlaufenden Schenkel vom jeweiligen Rad (30) geführt sind.

13. Getriebe nach einem der Ansprüche 1 - 12, wobei der jeweilige Körper (70) geführte Bahnen (74a, 74b; 75a, 75b) aufweist.

14. Getriebe nach Anspruch 13, wobei zwischen den einander zugeordneten Führungsbahnen (34b, 50b) und den Bahnen (74a, 74b; 75a, 75b) Wälzkörper (80, 90) angeordnet sind.

15. Getriebe nach Anspruch 14, wobei die Wälzkörper (80, 90) einen kreisrunden Querschnitt aufweisen.

16. Getriebe nach einem der Ansprüche 1-15, wobei das jeweilige Rad (30) und/oder der jeweilige Ausgangskörper (50) Distanzelemente (52) aufweisen.

17. Getriebe nach Anspruch 16, wobei die Distanzelemente (52) sich in Achsrichtung der Eingangswelle (10) erstrecken und so bemessen sind, daß der jeweilige Körper (70) zwischen dem Rad (30) und dem jeweiligen Ausgangskörper (50) druckfrei angeordnet ist.

18. Getriebe nach einem der Ansprüche 16 - 17, wobei die Distanzelemente (52) mit den Öffnungen (32) form- und/oder kraftschlüssig verbindbar sind.

19. Getriebe nach einem der Ansprüche 16 - 18, wobei die Verbindungsmittel (60) die Distanzelemente (52) sowie die Öffnungen (32) durchqueren.

20. Getriebe nach einem der Ansprüche 1 - 19, wobei der jeweilige Körper (70) eine durchgehende Öffnung (71) aufweist, die von der Eingangswelle (10) durchquert ist.

21. Getriebe nach einem der Ansprüche 1 - 20, wobei die Innenverzahnung (41) und/oder die Außenverzahnung (33) aus drehbar gelagerten Elementen mit kreisrundem Querschnitt gebildet sind.

22. Getriebe nach einem der Ansprüche 1 - 21, wobei der jeweilige Ausgangskörper (50) die Form eines Flansches aufweist, der in Bezug auf das Rad (40) drehbar gelagert ist.

23. Getriebe nach einem der Ansprüche 1 - 22, wobei der jeweilige Ausgangskörper (50) und das Rad (40) eine gemeinsame Rotationsachse besitzen.

24. Getriebe nach einem der Ansprüche 1 - 23, wobei das Rad (40) ein Teil des Gehäuses bildet.

25. Getriebe nach einem der Ansprüche 1 und 3 - 24, wobei die ein Paar bildenden Ausgangskörper (50, 50) miteinander unverdrehbar verbindbar und im Rad (40) drehbar gelagert sind und das Rad (40) mit einem Gehäuseteil (43) fest verbindbar ist, in dem ein angetriebenes und mit den Ausgangskörpern (50) verbindbares Organ (20) gelagert ist.

26. Getriebe nach einem der Ansprüche 1 und 3 - 25, wobei die Eingangswelle (10) mit einem Mitnehmer (15) mit axialen Zapfen (16) verbunden ist, die an der Stirnseite des Mitnehmers (16) und auf einem Kreis gleichmäßig verteilt sind und auf denen drehbar gelagerte Satellitenzahnräder (2) mit Außenverzahnungen (21) angeordnet sind, die mit der Innenverzahnung (57) eines der Ausgangskörper und gleichzeitig mit der Außenverzahnung (11) eines Eingangsritzels (1) kämmen.

27. Getriebe nach einem der Ansprüche 2 - 26, wobei der Ausgangskörper (50) in Bezug auf das Rad (40) drehbar gelagert ist, das Rad (40) mit einem Gehäuseteil (43) fest verbindbar ist und im Gehäuseteil (43) ein mit dem Ausgangskörper (50) fest verbundenes und angetriebenes Organ (20) drehbar gelagert ist.

28. Getriebe nach einem der Ansprüche 1 - 27, wobei der jeweilige Körper (70) planparallele Flächen aufweist.

## Claims

1. Gear, having at least one wheel (40) provided with an associated internal toothing (41), having output members (50, 50) which are rotatably mounted relative to the wheel (40), and having an input shaft (10) provided with at least two eccentric portions (17, 17), wherein a wheel (30), which is provided with an external toothing (33) and meshes with the internal toothing (41), is rotatably mounted on each portion, wherein the wheels (30, 30) are disposed between the output members (50, 50), and wherein a member (70), which converts the planetary movement of the wheel (30) into a rotary movement of the output member (50), is displaceably disposed between the respective wheel (30) and the associated output member (50) and executes movements transverse relative to the axis of the input shaft (10).

2. Gear, having a wheel (40) provided with an internal toothing (41), having an output member (50) which is rotatably mourted relative to the wheel (40), having an input shaft (10) provided with an eccentric portion (17), on which a wheel (30), which is provided with an external toothing (33) and meshes with the internal toothing (41), is rotatably mounted, and having a member (70), which is disposed between the wheel (30) and the output member (50) and converts the planetary movement of the wheel (30) into a rotary movement of the output member (50), said member (70) being displaceably disposed relative to the wheel (30) and the output member (50) and exerting transverse movements relative to the axis of the input shaft (10), characterised in that the member (70) has radially extending arms (74), some of which co-operate with the output member (50), while the others are in operative connection with the wheel (30).

3. Gear according to claim 1 or 2, wherein the axis of the shaft (10) and the axis of the respective eccentric portion (17) extend parallel to each other.

4. Gear according to claim 1, wherein the output members (50) are non-rotatably interconnectable by connecting means (60).

5. Gear according to claim 4, wherein the wheels (30) have openings (32) for the connecting means (60).

6. Gear according to one of claims 4 - 5, wherein the connecting means (60) traverse the wheels (30) in a contact-free manner.

7. Gear according to one of claims 4 - 6, wherein the connecting means (60) are configured as screws, which extend parallel to the axis (40a) of the input shaft (10).

8. Gear according to one of claims 1 - 7, wherein the wheel (30) and the respective output member (50) have guides (30b, 50b) for the member (70).

9. Gear according to one of claims 1 - 8, wherein the guides (30b, 50b) have linear guide paths (34b, 54b).

10. Gear according to one of claims 1 - 9, wherein the respective member (70) is linearly guided relative to the respective output member (50) and the wheel (30).

11. Gear according to one of claims 1 - 10, wherein the respective member (70) is configured in the form of a cross having arms (74) disposed at right angles to each other.

12. Gear according to one of claims 1 - 11, wherein two arms (74), which extend parallel to each other, are guided by the respective output member (50), while the other two arms, which extend parallel to each other, are guided by the respective wheel (30).

13. Gear according to one of claims 1 - 12, wherein the respective member (70) has guided paths (74a, 74b; 75a, 75b).

14. Gear according to claim 13, wherein rolling members (80, 90) are disposed between the guide paths (34b, 50b), which are associated with each other, and the paths (74a, 74b; 75a, 75b).

15. Gear according to claim 14, wherein the rolling members (80, 90) have a circular cross-section.

16. Gear according to one of claims 1 - 15, wherein the respective wheel (30) and/or the respective output member (50) have/has spacer members (52) therebetween.

17. Gear according to claim 16, wherein the spacer members (52) extend in the axial direction of the input shaft (10) and are so dimensioned that the respective member (70) is disposed between the wheel (30) and the respective output member (50) in a pressure-free manner.

18. Gear according to one of claims 16 - 17, wherein the spacer members (52) are connectable to the openings (32) in a form-locking manner and/or in a force-locking manner.

19. Gear according to one of claims 16 - 18, wherein the connecting means (60) traverse the spacer members (52) and the openings (32).

20. Gear according to one of claims 1 - 19, wherein the respective member (70) has a through-opening (71), which is traversed by the input shaft (10).

21. Gear according to one of claims 1 - 20, wherein the internal toothing (41) and/or the external toothing (33) are/is formed from rotatably mounted elements having a circular cross-section.

22. Gear according to one of claims 1 - 21, wherein the respective output member (50) has the form of a flange which is rotatably mounted relative to the wheel (40).

23. Gear according to one of claims 1 - 22, wherein the respective output member (50) and the wheel (40) have a common axis of rotation.

24. Gear according to one of claims 1 - 23, wherein the wheel (40) forms part of the housing.

25. Gear according to one of claims 1 and 3 - 24, wherein the output members (50, 50), which form a pair, are non-rotatably interconnectable and rotatably mounted in the wheel (40), and the wheel (40) is securedly connectable to a housing member (43), in which there is mounted a driven mechanism (20), which is connectable to the output members (50).

26. Gear according to one of claims 1 and 3 - 25, wherein the input shaft (10) is connected to an entrainment means (15) by axial pins (16), which are uniformly distributed in a circle on the end face of the entrainment means (15), and rotatably mounted satellite toothed wheels (2) are disposed on said pins and are provided with external toothings (21), which mesh with the internal toothing (57) of one of the output members and simultaneously with the external toothing (11) of an input pinion (1).

27. Gear according to one of claims 2 - 26, wherein the output member (50) is rotatably mounted relative to the wheel (40), the wheel (40) is securedly connectable to a housing member (43), and a driven mechanism (20), which is securedly connected to the output member (50), is rotatably mounted in the housing member (43).

28. Gear according to one of claims 1 - 27, wherein the respective member (70) has plane-parallel faces.

## Revendications

1. Engrenage avec au moins une roue (40) avec denture intérieure associée (41), avec des éléments de sortie (50, 50) montés à rotation par rapport à la roue (40), ainsi qu'avec un arbre d'entrée (10) avec au moins deux tronçons excentriques (17, 17), où sur chaque tronçon est montée à rotation une roue (30) à denture extérieure (33) en engrènement avec la denture intérieure (41), où les roues (30, 30) sont disposées entre les éléments de sortie (50, 50) et où entre chaque roue (30) et l'élément de sortie associé (50) est disposé à glissement un élément (70) transformant le mouvement planétaire ou épicycloïdal de l'élément de sortie (50) en un mouvement de rotation et exécute des mouvements transversaux par rapport à l'axe de l'arbre d'entrée (10).

2. Engrenage avec une roue (40) à denture intérieure (41) avec un élément de sortie (50) monté à rotation par rapport à la roue (40), avec un arbre d'entrée (10) avec un tronçon excentrique (17), sur lequel est montée à rotation une roue (30) à denture extérieure (33) en engrènement avec la denture intérieure (41), ainsi qu'avec un élément (70) disposé entre la roue (30) et l'élément de sortie (50) transformant en mouvement de rotation de l'élément de sortie (50) le mouvement planétaire ou épicycloïdal de la roue (30), élément (70) qui est monté à glissement par rapport à la roue (30) et à l'élément de sortie (50) et qui exécute des mouvements transversaux par rapport à l'axe de l'arbre d'entrée (10),
caractérisé
en ce que l'élément (70) présente des branches (74) disposées radialement, dont certaines coopèrent avec l'élément de sortie (50), tandis que les autres sont en liaison positive avec la roue (30).

3. Engrenage suivant la revendication 1 ou 2, où l'axe de l'arbre (10) et l'axe du tronçon excentrique intéressé (17) sont mutuellement parallèles.

4. Engrenage suivant la revendication 1, où les éléments de sortie (50) peuvent par des moyens de liaison (60) être reliés à l'abri d'une rotation mutuelle.

5. Engrenage suivant la revendication 4, où les roues (30) présentent des ouvertures (32) pour les moyens de liaison (60).

6. Engrenage suivant l'une des revendications 4 et 5, où les moyens de liaison traversent sans contact les roues (30).

7. Engrenage suivant l'une quelconque des revendications de 4 à 6, où les moyens de liaison (60) ont la forme de vis, qui sont disposées parallèlement à l'axe (40) de l'arbre d'entrée (10).

8. Engrenage suivant l'une quelconque des revendications de 1 à 7, où la roue (30) et l'élément de sortie (50) correspondant présente des guidages (30b, 50b) pour l'élément (70).

9. Engrenage suivant l'une quelconque des revendications de 1 à 8, où les guidages (30b, 50b) présentent des trajectoires de guidage linéaires (34b, 54b).

10. Engrenage suivant l'une quelconque des revendications de 1 à 9, où l'élément (70) intéressé est à guidage linéaire par rapport à l'élément de sortie (50) correspondant et par rapport à la roue (30).

11. Engrenage suivant l'une quelconque des revendications de 1 à 10, où l'élément intéressé (70) a la forme d'une croix à branches (74) perpendiculaires les unes aux autres.

12. Engrenage suivant l'une quelconque des revendications de 1 à 11, où deux branches (74) mutuellement parallèles sont guidées par l'élément de sortie (50) correspondant, tandis que les deux autres branches mutuellement parallèles sont guidées par la roue correspondante (30).

13. Engrenage suivant l'une quelconque des revendications de 1 à 12, où l'élément intéressé (70) présente des trajectoires guidées (74a, 74b; 75a, 75b).

14. Engrenage suivant la revendication 13, où entre les trajectoires de guidage associées (34b, 50b) et les trajectoires (74a, 74b; 75a, 75b) sont disposés des éléments de roulement (80, 90).

15. Engrenage suivant la revendication 14, où les éléments de roulement (80, 90) ont une section transversale circulaire.

16. Engrenage suivant l'une quelconque des revendications de 1 à 15, où la roue intéressée (30) et/ou l'élément de sortie intéressé (50) présentent des éléments d'espacement (52).

17. Engrenage suivant la revendication 16, où les éléments d'espacement (52) sont disposés en direction axiale de l'arbre d'entrée (10) et sont dimensionnés de manière telle que l'élément intéressé (70) est disposé sans être soumis ) une pression entre la roue (30) et l'élément de sortie (50) intéressé.

18. Engrenage suivant l'une des revendications 16 ou 17, où les éléments d'espacement (52) peuvent être reliés par similarité de forme et/ou par voie mécanique aux ouvertures (32).

19. Engrenage suivant l'une quelconque des revendications de 16 à 18, où les moyens de liaison (60) traversent les éléments d'espacement (52) ainsi que les ouvertures (32).

20. Engrenage suivant l'une quelconque des revendications de 1 à 19, où l'élément intéressé (70) présente une ouverture continue (71), qui est traversée par l'arbre d'entrée (10).

21. Engrenage suivant l'une quelconque des revendications de 1 à 20, où la denture intérieure (41) et/ou la denture extérieure (33) sont constituées par des éléments montés à rotation à section transversale circulaire.

22. Engrenage suivant l'une quelconque des revendications de 1 à 21, où l'élément de sortie intéressé (50) présente la forme d'un collet, monté à rotation par rapport à la roue (30).

23. Engrenage suivant l'une quelconque des revendications de 1 à 22, où l'élément de sortie intéressé (50) et la roue (40) possèdent un axe de rotation commun.

24. Engrenage suivant l'une quelconque des revendications de 1 à 23, où la roue (40) constitue une partie du boîtier.

25. Engrenage suivant l'une quelconque des revendications 1 et de 3 à 24, où les éléments de sortie (50, 50) formant une paire sont solidaires et montés à rotation solidaire dans la roue (40) et où la roue (40) peut être solidarisée avec une partie de boîtier (43), dans laquelle est monté un élément (20) entraîné et pouvant être relié aux éléments de sortie (50).

26. Engrenage suivant l'une quelconque des revendications 1 et de 3 à 25, où l'arbre d'entrée (10) est relié à un taquet d'entraînement (15) à tourillons axiaux (16) qui sont distribués uniformément sur la face frontale du taquet d'entraînement (16) suivant un cercle et sur lesquels sont disposées des pignons satellites (2) à dentures extérieures (21), qui sont en engrènement avec la denture intérieure (57) d'un des éléments de sortie et en même temps avec la denture extérieure (11) d'un pignon d'entrée (1).

27. Engrenage suivant l'une quelconque des revendications de 2 à 26, où l'élément de sortie (50) est monté à rotation par rapport à la roue (40), où la roue (40) peut être solidarisée avec une partie de boîtier (43) et où dans la partie de boîtier (43) est monté à rotation un élément (20) solidarisé avec l'élément de sortie (50) et entraîné.

28. Engrenage suivant l'une quelconque des revendications de 1 à 27, où l'élément (70) présente des faces à plans parallèles.
